# EUROPEAN PATENT APPLICATION

(11) **EP 4 488 416 A2**
(43) Date of publication of application: **08.01.2025**
(21) Application number: 24173195.9
(22) Date of filing: 29.04.2024
(51) Int. Cl.: C25B 1/04, C25B 9/19, C25B 9/73

(54) **ELECTROCHEMICAL DEVICE FOR OBTAINING HYDROGEN**

(30) Priority: 27.06.2023 PT 2023118755
(71) Applicant: ISPT - Industrial Services, S.A., 2740-120 Porto Salvo (PT)
(72) Inventor: Tavares Custódio, António Paulo, 2820-477 Charneca de Caparica (PT); Granadeiro Martins, André Filipe, 2735-580 Agualva-Cacém (PT); Espingardas do Nascimento, Ricardo Luís, 2785-261 SD Rana (PT); Lourenço Inácio, Patrick, 1099-085 Lisboa (PT); Freitas Camacho, Edgar Alexandre, 9001-150 Funchal (PT)
(74) Representative: Moniz Pereira, Manuel

(57) **Abstract**

The present invention relates to a device for obtaining hydrogen, more specifically an electrochemical device for producing hydrogen in an alkaline environment, using electrical energy from renewable sources, made up of sustainable, low-cost materials and components. The electrochemical device (1) of the present invention allows a compact assembly consisting of a bipolar plate sheet with multiple functionalities and which allows the flow of gases to be modelled and customised. The electrochemical device (1) of the present invention is assembled by at least one electrochemical cell (9), additionally comprises a lower collector plate (6a) and an upper collector plate (6b) and is delimited by a lower clamping plate (5a) and an upper clamping plate (5b). The lower clamping plate (5a) and the upper clamping plate (5b) have holes into which longitudinal threaded rods (4) inserted, which are secured by clamping nuts (3).

## Description

### Field of the invention

The present invention belongs to the field of electrochemical devices for the production of hydrogen, more specifically an electrochemical device for the production of hydrogen in an alkaline environment, using electrical energy from renewable sources, and consisting of sustainable and low-cost materials and components.

### Summary of the invention

Electrolysis consists of breaking down the water molecule by applying an electric current to two electrodes - the anode, where oxygen is formed, and the cathode, where hydrogen is formed. Hydrogen is considered a "green" energy vector when it is produced through electrolysis, and the electrolysis is carried out using renewable energy sources such as solar or wind power.

Alkaline electrolyser cells consist of an anode, a cathode, and a diaphragm, which enables the passage of hydroxide ions present in the electrolyte and which are formed at the cathode and pass through the diaphragm towards the anode. The electrolyte can be a solution of sodium hydroxide or potassium hydroxide with a concentration of between 0,1 mol/L and 12 mol/L. The frame and seals are non-conductive materials that, together with the diaphragm, prevent contamination between the two gases formed: hydrogen and oxygen. Additionally, electrolysers may comprise several bipolar sheets that allow current to pass between cells.

### Identifying and solving the technical problem

However, equipment that works in an alkaline environment has a few limitations and shortcomings. This equipment has elements with the sole purpose of guaranteeing the existence of a *zero-gap* in the cell's components, i.e., a distance of less than 0,0002 m between the anode and the diaphragm and between the cathode and the diaphragm. As such, the assembly process is time-consuming and complicated. In other inventions the electrodes are fixed, and the proximity required for *zero-gap* does not exist.

Additionally, they have the limitation that there is no channel between the diaphragm and the electrodes to allow the flow of reagents and products, which leads to a lack of high efficiency due to the occupation of the active centres in the electrode by the hydrogen and oxygen bubbles formed during electrolysis.

Nevertheless, the high cost of "green" hydrogen and its lack of competitiveness compared to hydrogen produced using fossil fuels has been a problem.

In this regard, the object of the present invention is an electrochemical device that makes it possible to reduce the cost of "green" hydrogen by increasing the efficiency of the electrochemical device and reducing the cost of the materials that make up the electrochemical device.

### Background to the invention

Examples of electrochemical devices for hydrogen production are described in various patent documents, such as patent document WO2013012342 A2, which describes an electrolyser with modules and a method of producing it containing an extra pressure element included in the elements of each module in addition to the diaphragm, frame, anode, and cathode, leading the device to have a high cost per kW.

### Advantages of the invention

The object of the present invention is an electrochemical device for producing hydrogen using electrical energy from renewable sources, consisting of sustainable and low-cost materials and components.

The electrochemical device of the present invention allows for a compact assembly comprising a bipolar sheet with multiple functionalities and which allows the flow of gases to be modelled and customised.

The bipolar sheet comprises a region with a geometry that ensures a cell architecture designated as *zero-gap*, which leads to lower ohmic loss and higher cell efficiency. The aforementioned geometry of the bipolar sheet allows for the efficient removal of gases formed in the region between the electrode and the bipolar sheet, promoting the flow of the input fluids (electrolyte and water) and if the fluids at the exit of each cell (hydrogen and oxygen), while also being impermeable to gases.

Additionally, the electrochemical device of the present invention comprises electrodes with a geometry that ensures uniform current distribution and a high electrochemical active area.

Another advantage is the possibility of customising the electrode to increase its electrochemically active area through electrodeposition, or another method of adding a catalytically active substance that reduces the overvoltage required for hydrogen formation.

The electrochemical device of the present invention further comprises a frame which ensures the leak tightness between the frame-bipolar sheet interface and the electrode-diaphragm, directs the fluid flow, and electrically isolates the cell.

Nevertheless, the electrochemical device is reversible, meaning that hydrogen and oxygen are produced at any of the electrodes and in any of the semi-chambers, with an efficiency of over 80% HHV.

### Brief description of the figures

These and other features can be easily understood from the attached drawings, which should be considered as mere examples and in no way restrictive of the field of the invention. In the drawings, and for illustrative purposes, the measurements of some of the constituents may be exaggerated and not drawn to scale. The absolute dimensions and relative dimensions do not correspond to the actual relationships for the embodiment of the invention.

In a preferred embodiment:

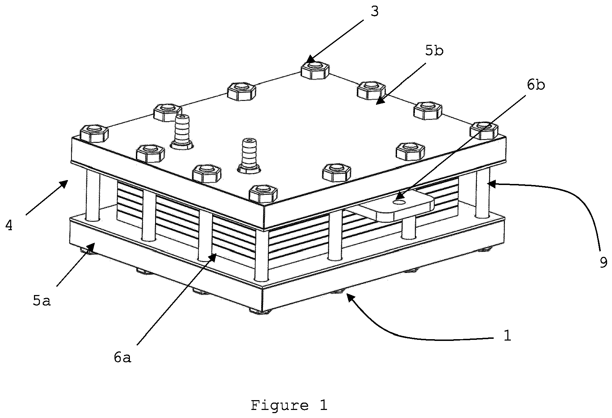

Figure 1 shows the isometric view of the invention's electrochemical device.

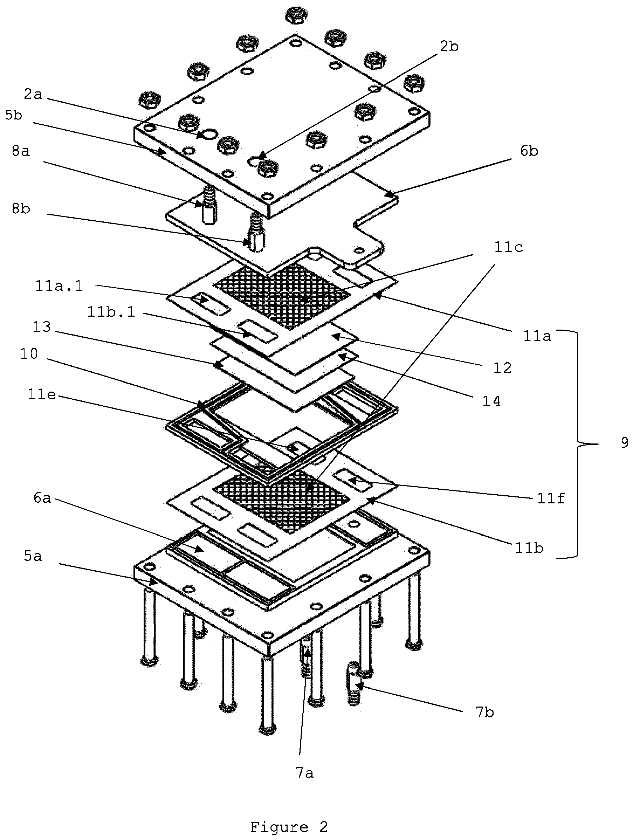

Figure 2 shows an exploded view of the invention's electrochemical device with a single electrochemical cell.

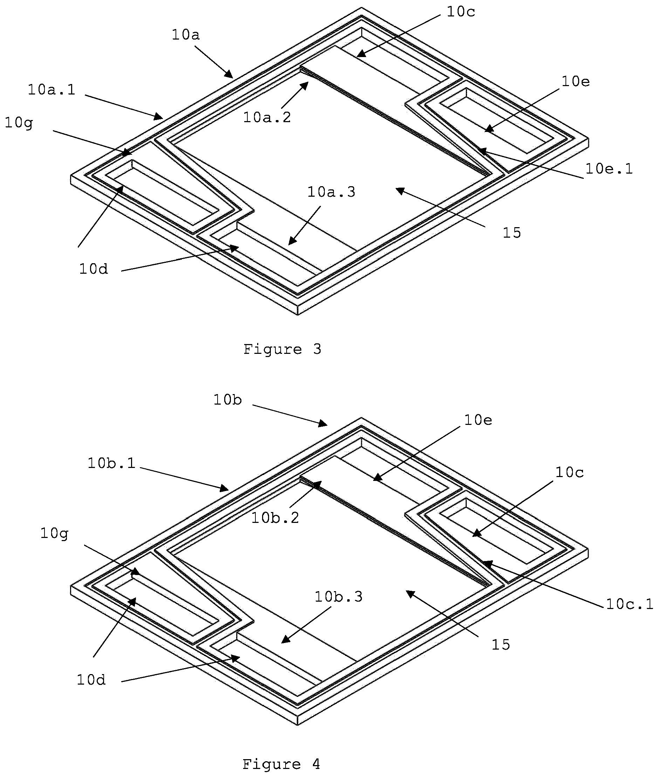

Figure 3 shows the isometric view of the upper side of a frame.
Figure 4 shows the isometric view of the underside of a frame.

The elements and components of the equipment of the invention and the elements needed to operate the present invention are marked in the figures:
(1) Electrochemical device
(2a) Hole for the anode
(2b) Hole for the cathode
(3) Clamping nuts
(4) Longitudinal threaded rods
(5a) Lower clamping plate
(5b) Upper clamping plate
(6a) Lower collector plate
(6b) Upper collector plate
(7a) Hydrogen, water, and electrolyte outlet accessory
(7b) Oxygen, water, and electrolyte outlet accessory
(8a) Inlet accessory into the anode semi-chamber
(8b) Inlet accessory into the cathode semi-chamber
(9) Electrochemical cell
(10) Frame
(10a) Upper face of the frame
(10a.1) Notch in the upper face of the frame
(10a.2) Channel in the upper face of the frame
(10a.3) Channel from the upper face of the frame to the cathode semi-chamber
(10b) Lower face of the frame
(10b.1) Notch in the lower face
(10b.2) Channel in the lower face
(10b.3) Channel from the lower face of the frame to the anode semi-chamber
(10c) Hole 1
(10c.1) Hole seal 1
(10d) Hole into the anode semi-chamber
(10e) Hole 2
(10e.1) Hole seal 2
(10g) Notch or groove
(11a) Upper bipolar sheet
(11a.1) Hole in the upper bipolar sheet
(11b) Lower bipolar sheet
(11b.1) Hole in the lower bipolar sheet
(11c) Area with undulated geometry
(11e) Hole in the bipolar sheet for the passage of hydrogen and electrolyte
(11f) Hole in the bipolar sheet for the passage of oxygen
(12) Cathode
(13) Anode
(14) Diaphragm
(15) Designated area for the electrodes and diaphragm

### Detailed description of the invention

"Green" hydrogen means hydrogen produced through electrolysis, which is carried out using renewable energy sources such as solar or wind power.

"*Zero-gap*" means that there is a distance of less than 0,0002 m between the anode and the diaphragm and between the cathode and the diaphragm.

"Electrochemical cell" means a module capable of carrying an electric current, the components of which are the anode, cathode, diaphragm, frame, and bipolar sheet.

"Semi-chamber" means the space between the electrode (anode (13) and/or cathode (12)) and the upper bipolar sheet (11a) and/or the lower bipolar sheet (11b).

"Undulated geometry" means geometry that forms waves, ripples, curves, or sinuosities.

As will be clear to an expert in the field, the application of the principles described here is not limited to the presented embodiments. Possible changes that may occur in the present invention, defined in number, remain within the scope of the present invention.

The object of the present invention is an electrochemical device (1) capable of producing hydrogen through the electrolysis of water by supplying electric current to at least one electrochemical cell (9).

Referencing the figures, the invention concerns an electrochemical device (1) assembled by at least one electrochemical cell (9). The electrochemical device (1) is delimited by a lower clamping plate (5a) and an upper clamping plate (5b). The lower clamping plate (5a) and the upper clamping plate (5b) have the same shape, but their dimensions may vary.

The lower clamping plate (5a) and the upper clamping plate (5b) have a thickness of between 0,002 and 0,04 m, preferably between 0,013 and 0,026 m, and a width and height of between 0,01 and 0,6 m, preferably between 0,15 and 0,35 m.

Additionally, the lower clamping plate (5a) and the upper clamping plate (5b) have holes into which the longitudinal threaded rods (4) are inserted, secured by clamping nuts (3), which are screwed on with a uniform torque that can vary between 1 Nm and 100 Nm, preferably between 2 and 20 Nm.

The lower clamping plate (5a) and the upper clamping plate (5b) are made of a corrosion-resistant metal such as, but not exclusively, stainless steel.

The electrochemical cell (9) is delimited by an upper bipolar sheet (11a) and a lower bipolar sheet (11b), a diaphragm (14), a frame (10), and two electrodes: an anode (13) and a cathode (12). The electrochemical cell (9) is reversible, which means that hydrogen and oxygen are produced in either of the electrodes, anode (13) or cathode (12), and in either of the electrochemical semi-chambers, divided by a diaphragm (14).

In one embodiment, the cathode (12) and the anode (13) may optionally not be the same, presenting differences among them in composition, geometry, or material.

The cathode (12) and the anode (13) have a geometry that ensures uniform current distribution and a high electrochemical active area. The cathode (12) and the anode (13) are selected from: a perforated sheet, felt, foam, or square or hexagonal wire mesh made of stainless steel or nickel.

For both the cathode (12) and the anode (13), the electrode can optionally be customised to increase its electrochemically active area through electrodeposition or another method of adding a catalytically active substance that reduces the overvoltage required for the formation of hydrogen at the cathode (12) or oxygen at the anode (13).

In one embodiment, if the electrochemical device (1) has more than one electrochemical cell (9), the electrical contact between the cathode (12) and the anode (13) of two neighbouring electrochemical cells (9) is made by means of a bipolar sheet.

The area with undulated geometry (11c) has an undulated geometry, in which the wave of the undulated geometry is sinusoidal, square, or triangular, and has an amplitude of between 0,0005 and 0,01 m, preferably between 0,001 and 0,003 m, and a wavelength of between 0,0003 and 0,07 m, preferably between 0,009 and 0,017 m, ensuring electrical contact between the lower collector plate (6a) and the upper collector plate (6b) and the adjacent electrode.

The upper bipolar sheet (11a) and the lower bipolar sheet (11b) are made of a corrosion-resistant metal such as, but not exclusively, stainless steel, and have a thickness of between 0,0001 and 0,02 m, preferably between 0,0004 and 0,001 m.

In one embodiment, the area with undulated geometry (11c) present on the upper bipolar sheet (11a) coincides with the dimensions of the adjacent electrode, i.e., the anode (13), ensuring that the upper bipolar sheet (11a) acts as a pressure element, so that the distance between the cathode (12) and the diaphragm (14) is less than 0,0002 m. Similarly, the undulated geometry area (11c) on the lower bipolar sheet (11b) ensures a distance of less than 0,0002 m between the anode (13) and the diaphragm (14).

The electrochemical cell (9) thus has a "zero-gap" structure, with a lower ohmic loss associated with the transport of hydroxide ions through the diaphragm (14) due to the distance of less than 0,0002 m between the electrodes (cathode (12) and anode (13)) and the diaphragm (14).

### Method of operation

In one embodiment, the water and the electrolyte enter the electrolyser through the inlet accessory into the anode semi-chamber (8a) and through the inlet accessory into the cathode semi-chamber (8b), which are threaded, glued, or clamped to the upper collector plate (6b).

The electrolyte is selected from sodium hydroxide or potassium hydroxide with a mass percentage between 10 and 40% (m/m), preferably between 20 and 35% (m/m).

The inlet accessory into the anode semi-chamber (8a) and the inlet accessory into the cathode semi-chamber (8b) are the same. However, they only differ in their positioning on the upper collector plate (6b). The upper clamping plate (5b) has two holes: the hole for the anode (2a) and the hole for the cathode (2b), where the inlet accessory into the anode semi-chamber (8a) and the inlet accessory into the cathode semi-chamber (8b) are placed respectively, to allow a pipe or hose to be connected to them so that water and electrolyte can enter the interior of the electrochemical device (1).

The inlet accessory into the anode semi-chamber (8a) and the inlet accessory into the cathode semi-chamber (8b) are made of a polymeric material such as, but not exclusively, thermoplastic or thermosetting, or of a corrosion-resistant metal such as, but not exclusively, stainless steel covered with an electrically insulating material.

The electric current is introduced into the electrochemical device (1) via the upper collector plate (6b) and the lower collector plate (6a). The electric current density varies between 0,1 A/m² and 10000 A/m², preferably between 2500 and 6500 A/m².

The lower collector plate (6a) and the upper collector plate (6b) are made of a corrosion-resistant material such as, but not exclusively, stainless steel.

Additionally, the electrochemical device (1) works with an efficiency above 75% HHV and with the electrolyte at a temperature of at least 80 °C.

The upper collector plate (6b) is electrically insulated from the upper clamping plate (5b) by covering the surface of the upper collector plate (6b) with an electrically insulating product, or by placing a sheet of a non-conductive polymer between the upper collector plate (6b) and the upper clamping plate (5b).

In one embodiment, the upper collector plate (6b) is connected to the negative pole of a source, and on the opposite side of the electrochemical device (1), the lower collector plate (6a) is connected to the positive pole of a source.

In another embodiment, the connections can be made in the opposite way, in which case the cathode (12) will behave like an anode (13), and the anode (13) will behave like a cathode (12) .

The electrolyte and water entering through the inlet accessory into the cathode semi-chamber (8b) go through the hole in the lower bipolar sheet (11b.1) present in the upper bipolar sheet (11a), which is in contact with the negatively charged upper collector plate (6b).

The contact between the upper collector plate (6b) and the upper bipolar sheet (11a) ensures that the upper surface of the upper bipolar sheet (11a) does not come into contact with the electrolyte and water or with the hydrogen formed in the cathode (12). Optionally, there can be a notch or groove on the lower surface of the upper collector plate (6b) in which a seal made of thermoplastic polyurethane (TPU) or a thermoplastic or thermosetting polymer, 3D-printed or produced by injection moulding, can optionally be placed.

The electrolyte and the water go through the cathode semi-chamber, between the area with undulated geometry (11c) on the upper bipolar sheet (11a) and the cathode (12), where hydrogen is produced, after going through the channel on the upper face of the frame to the cathode semi-chamber (10a.3).

The hydrogen and the electrolyte then go through hole 1 (10c), after going through the channel on the upper face of the frame (10a.2), which is aligned with the hole in the bipolar sheet for the passage of hydrogen and electrolyte (11e), present in the lower bipolar sheet (11b) that is positively charged due to being in contact with the positively charged lower collector plate (6a).

The electrolyte and the hydrogen are released through the hydrogen, water, and electrolyte outlet accessory (7a).

In another embodiment, the electrolyte and water entering through the inlet accessory into the anode semi-chamber (8a) go through the hole in the upper bipolar sheet (11a.1), which is in contact with the negatively charged upper collector plate (6b). The electrolyte and the water go through the two holes into the anode semi-chamber (10d) and do not come into contact with the cathode semi-chamber due to the greater thickness of the notch or groove (10g) present on the upper face of the frame (10a) between the hole in the frame for the anode semi-chamber (10d) and the area designated for the electrodes and diaphragm (15) .

The hole in the frame to the anode semi-chamber (10d) optionally comprises a notch or groove (10g).

The electrolyte and the water, after going through the hole to the anode semi-chamber (10d), go through the channel on the lower face of the frame to the anode semi-chamber (10b.3), the area between the positively charged lower bipolar sheet (11b) and the anode (13), where oxygen is formed. The electrolyte, water, and oxygen travel through the channel on the lower face (10b.2) and are released from the electrochemical device (1) via the oxygen, water, and electrolyte outlet accessory (7b) after passing through the hole in the bipolar sheet for oxygen passage (11f), in the lower bipolar sheet (11b), and hole 2 (10e), in the frame (10).

The frame (10) and the diaphragm (14) prevent the gases formed in the respective semi-chambers (cathodic or anodic) from mixing and ensures the leak tightness of the electrochemical cell (9).

In another embodiment, the notch or groove (10g) optionally comprises a seal, both on the upper face of the frame (10a) and on the lower face of the frame (10b).

The seal is made of thermoplastic polyurethane (TPU) or a thermoplastic or thermosetting polymer, 3D-printed or produced by injection moulding.

The notch or groove seal (10g) and the hole 2 seal (10e.1) on the upper face of the frame (10a) prevent the electrolyte, water, and oxygen from entering the cathode semi-chamber.

The seal for the notch or groove (10g) and the seal for hole 1 (10c.1) on the lower face of the frame (10b) ensure that the electrolyte, water, and hydrogen destined for the cathode semi-chamber do not mix with the electrolyte, water, and oxygen present in the anode semi-chamber.

The frame (10) comprises a notch on the upper face (10a.1) and a notch on the lower face (10b.1) whose purpose is to seal off the electrolyte, water, oxygen, and hydrogen from the outside.

The frame (10) is made of a plastic material such as, but not exclusively, thermoplastic or thermosetting, or a plastic reinforced by injection moulding, 3D printing, or milling.

## Claims

1. An electrochemical device for hydrogen production **characterised in that** the electrochemical device comprises:
- at least one electrochemical cell (9) delimited by an upper bipolar sheet (11a) and a lower bipolar sheet (11b) and comprising:
- a diaphragm (14);
- a frame (10);
- two electrodes: an anode (13) and a cathode (12);
in which:
the upper bipolar sheet (11a) comprises an undulated area (11c) on the upper bipolar sheet (11a) and the lower bipolar sheet (11b) comprises an undulated area (11c) on the lower bipolar sheet (11b); and
the distance between the cathode (12) and the diaphragm (14) is less than 0,0002 m and the distance between the anode (13) and the diaphragm (14) is less than 0,0002 m.

2. The device according to the preceding claim **characterised in that** the undulated area (11c) on the upper bipolar sheet (11a) and the undulated area (11c) on the lower bipolar sheet (11b) in which the wave of the undulated area (11c) is selected from: sinusoidal, square, or triangular.

3. The device according to the preceding claim **characterised in that** the wave from the undulated area (11c) in the upper bipolar sheet (11a) and the wave from the undulated area (11c) in the lower bipolar sheet (11b) have an amplitude of between 0,0005 and 0,01 m and a wavelength of between 0,0003 and 0,07 m.

4. The device according to any of the preceding claims **characterised in that** the upper bipolar sheet (11a) and the lower bipolar sheet (11b) have a thickness of between 0,0001 and 0,02 m.

5. The device according to any of the preceding claims **characterised in that** the cathode (12) and the anode (13) are selected from: a perforated sheet, a felt, a foam, or a square or hexagonal wire mesh made of stainless steel or nickel.

6. The device according to any of the preceding claims **characterised in that** it is delimited by a lower clamping plate (5a) and an upper clamping plate (5b).

7. The device according to the preceding claim **characterised in that** the lower clamping plate (5a) and the upper clamping plate (5b) have a thickness of between 0,002 and 0,04 m and a width and height of between 0,01 and 0,6 m.

8. The device according to any of claims 10 to 11 **characterised in that** the upper bipolar sheet (11a), the lower bipolar sheet (11b), the lower clamping plate (5a) and the upper clamping plate (5b) are made of a corrosion-resistant metal.

9. The device according to any of claims 10 to 13 **characterised in that** the upper clamping plate (5b) comprises two holes: the hole for the anode (2a) and the hole for the cathode (2b) and the hole for the anode (2a) comprises an inlet accessory into the anode semi-chamber (8a) and that the hole for the cathode (2b) comprises an inlet accessory into the cathode semi-chamber (8b).

10. The device according to the preceding claim **characterised in that** the inlet accessory into the anode semi-chamber (8a) and the inlet accessory into the cathode semi-chamber (8b) are made of a polymeric material or a corrosion-resistant metal covered with an electrically insulating material.

11. The device according to any of the preceding claims **characterised in that** the frame (10) comprises a notch in the upper face (10a.1) and a notch in the lower face (10b.1).

12. The device according to any of the preceding claims **characterised in that** the frame (10) comprises a notch or groove (10g).

13. The device according to the preceding claim **characterised in that** the notch or groove (10g) comprises a seal.

14. The device according to the preceding claim **characterised in that** the seal is made of a thermoplastic polyurethane (TPU) or a thermoplastic or thermosetting polymer.

15. The device according to any of the preceding claims **characterised in that** the frame (10) is manufactured in a plastic material selected from: thermoplastic or thermosetting or in a plastic reinforced by injection, 3D printing, or milling.
